# EUROPÄISCHE PATENTSCHRIFT

(11) **EP 3 568 614 B1**
(45) Veröffentlichungstag und Bekanntmachung des Hinweises auf die Patenterteilung: **09.03.2022**
(21) Anmeldenummer: 17825740.8
(22) Anmeldetag: 13.12.2017
(51) Int. Cl.: F16H 45/02, F16H 57/00, F16F 15/18, F16F 15/131

(54) **DREHMOMENTÜBERTRAGUNGSEINRICHTUNG**
TORQUE-TRANSMITTING DEVICE
DISPOSITIF DE TRANSMISSION DE COUPLE

(30) Priorität: 16.01.2017 DE 102017100665
(43) Veröffentlichungstag der Anmeldung: 20.11.2019
(73) Patentinhaber: Schaeffler Technologies AG & Co. KG, 91074 Herzogenaurach (DE)
(72) Erfinder: KRAUSE, Thorsten, 77815 Bühl (DE)
(86) Internationale Anmeldenummer: PCT/DE2017/101071
(87) Internationale Veröffentlichungsnummer: WO 2018/130239

(56) Entgegenhaltungen:
- WO-A1-2008/046381
- DE-A1- 19 729 617
- DE-A1-102011 007 117
- DE-A1-102013 220 483

## Beschreibung

Die Erfindung betrifft eine Drehmomentübertragungseinrichtung, umfassend einen zumindest abschnittsweise innerhalb eines Gehäuses der Drehmomentübertragungseinrichtung angeordneten Drehmomentwandler mit einem Pumpenrad, einem Turbinenrad und einem Leitrad.

Mit einer solchen Drehmomentübertragungseinrichtung, im Stand der Technik hinlänglich bekannt, ist eine hydrodynamische Kraftübertragung möglich, indem eine Flüssigkeit, insbesondere ein Öl, von den Schaufeln des Pumpenrads zum Turbinenrad hin beschleunigt wird. Das Pumpenrad wird dabei mittels einer Eingangswelle, die mit einer Antriebseinrichtung verbunden ist, angetrieben. Pumpenrad und Turbinenrad besitzen dabei entsprechende Schaufeln, an denen das Öl beschleunigt bzw. abgelenkt wird. Üblicherweise ist im Stand der Technik das Leitrad fest mit dem Gehäuse verbunden, so dass eine Relativbewegung zwischen beiden Bauteilen nicht möglich ist. Dabei kann sich das Arbeitsfluid an den Schaufeln des Leitrads abstützen und dadurch einen Rückstau bewirken, so dass an den Schaufeln des Turbinenrads eine Überhöhung des Drehmoments entsteht. Somit ist das Drehmoment an dem Turbinenrad höher als das ursprünglich von der Antriebseinrichtung eingeleitete Drehmoment.

Ferner sind aus dem Stand der Technik Drehmomentübertragungseinrichtungen bekannt, bei denen beispielsweise ein Torsionsdämpfer in Kombination mit einer Leistungsverzweigung verwendet wird. Beispielsweise ist aus der Druckschrift US 8 939 860 B2 eine Drehmomentübertragungseinrichtung bekannt, die eine solche Kombination aus Torsionsdämpfer und Leistungsverzweigung aufweist. Dabei ist eine Schwingungsdämpfungseinrichtung innerhalb des Gehäuses des Drehmomentwandlers angeordnet, wobei eine beispielsweise über die Lock-up-Kupplung eingetragene Leistung mittels eines Planetengetriebes verzweigt wird. Durch die Anordnung der Schwingungsdämpfungseinrichtung innerhalb des Drehmomentwandlers bzw. des Gehäuses des Drehmomentwandlers unterliegt die Schwingungsdämpfungseinrichtung den Randbedingungen, die innerhalb des Gehäuses des Drehmomentwandlers vorliegen. Die Schwingungsdämpfungseinrichtung erfährt daher eine absolute Drehzahl und unterliegt den Einflüssen der Fliehkraft. Ferner wird die Schwingungsdämpfungseinrichtung innerhalb desselben Mediums betrieben, das innerhalb des Gehäuses des Drehmomentwandlers vorliegt.

Ferner sind aus der DE 197 29 617 A1 Automatikgetriebeeinrichtungen bekannt, die ein Getriebe mit ersten und zweiten Planetenradsätzen aufweisen, wobei ein Sonnenrad eines der Planetenradsätze mit dem Leitrad über eine Freilaufkupplung einerseits und über eine Bremse mit dem Getriebegehläuse andererseits verbunden ist.

Der Erfindung liegt daher die Aufgabe zu Grunde eine verbesserte Drehmomentübertragungseinrichtung anzugeben.

Erfindungsgemäß wird die Aufgabe durch die Merkmalskombination des Anspruches 1 gelöst, die Unteransprüche zeigen vorteilhafte Ausgestaltungsformen der Erfindung.

Die Erfindung beruht demnach auf der Erkenntnis, dass das Leitrad im Gegensatz zum Stand der Technik nicht zwangsläufig fest mit dem Gehäuse des Drehmomentwandlers verbunden sein muss. Stattdessen kann das Leitrad relativ zum Gehäuse des Drehmomentwandlers drehbar angeordnet sein, so dass eine Relativbewegung zwischen Leitrad und Gehäuse möglich ist. Selbstverständlich kann dabei eine Kopplung zwischen Leitrad und Gehäuse des Drehmomentwandlers in bestimmten Betriebszuständen vorgesehen sein.

Das Leitrad ist erfindungsgemäß mit einer Statorwelle verbunden, die mit einem Aktor gekoppelt ist. Der Aktor ist dafür vorgesehen, ein Drehmoment auf die Statorwelle auszuüben, das durch die Kopplung der Statorwelle mit dem Leitrad auf das Leitrad übertragen wird. Ersichtlich ist es somit möglich, mittels des Aktors Drehmomente über die Statorwelle und somit über das Leitrad in das System einzutragen. Dadurch können Schwingungen, die über die Antriebseinrichtung in den Drehmomentwandler und somit in die Drehmomentübertragungseinrichtung eingeleitet wurden, durch die entsprechende Ansteuerung des Aktors getilgt bzw. reduziert werden. Es ist dabei insbesondere nicht erforderlich, dass die Statorwelle sich mit einer Drehzahl, insbesondere der absoluten Drehzahl des Drehmomentwandlers, beispielsweise des Pumpenrads, dreht. Vielmehr ist vorgesehen, dass diese durch den Aktor eine Schwing-leistung erfährt, die dafür vorgesehen ist, im System befindliche Schwingungen zu neutralisieren. Insbesondere können zwei Leistungszweige mittels einer Leistungsverzweigungseinrichtung geschaffen werden, so dass die in einem Zweig mittels des Aktors induzierte Schwingleistung im Wege der aus dem Stand der Technik bekannten Antiresonanz mit dem ungedämpften Zweig eine nahezu vollständige Tilgung der eingeleiteten Schwingungen ermöglicht.

Erfindungsgemäß ist bei der Drehmomentübertragungseinrichtung eine Schwingungsdämpfungseinrichtung vorgesehen, die außerhalb des Gehäuses der Drehmomentübertragungseinrichtung getriebeseitig angeordnet ist, wobei die Leistungsverzweigungseinrichtung zwischen dem Drehmomentwandler und einer Getriebeeingangswelle innerhalb des Gehäuses der Drehmomentübertragungseinrichtung angeordnet ist. Demnach ist vorgesehen, dass die Schwingungsdämpfungseinrichtung nicht, wie im Stand der Technik üblich, innerhalb des Gehäuses des Drehmomentwandlers angeordnet ist. Somit erfährt die Schwingungsdämpfungseinrichtung keine absolute Drehzahl, wodurch sich die negativen Einflüsse, wie beispielsweise Reibungshysterese, Einfluss auf die Dauerhaltbarkeit und die Kennliniengestaltung, bei der Auslegung der Schwingungsdämpfungseinrichtung nicht in Kauf genommen werden müssen. Demgegenüber schlägt die beschriebene Ausgestaltung vor, dass die Schwingungsdämpfungseinrichtung außerhalb des Gehäuses der Drehmomentübertragungseinrichtung bzw. des Drehmomentwandlers angeordnet ist. Dadurch kann die Schwingungsdämpfungseinrichtung, die beispielsweise als Torsionsdämpfer ausgebildet ist, unabhängig von den Randbedingungen der übrigen Drehmomentübertragungseinrichtung bzw. des Drehmomentwandlers betrieben werden. Insbesondere ist die Schwingungsdämpfungseinrichtung getriebeseitig in Bezug auf die Drehmomentübertragungseinrichtung bzw. den Drehmomentwandler angeordnet.

Besonders bevorzugt ist es dabei möglich, die Schwingungsdämpfungseinrichtung gezielt, beispielsweise gekapselt, mit einem anderen Schmierstoff zu betreiben, als das Fluid innerhalb des Drehmomentwandlers. Die Schwingungsdämpfungseinrichtung ist sonach bevorzugt angeordnet und nicht, wie im Stand der Technik üblich, im Gehäuse des Drehmomentwandlers. Durch die getriebeseitige Anordnung ist es möglich, die Schwingungsdämpfungseinrichtung unabhängig vom Gehäuse des Drehmomentwandlers bzw. der Drehmomentübertragungseinrichtung abzustützen, so dass diese losgelöst von den beschriebenen Randbedingungen betrieben werden kann.

Erfindungsgemäß ist dabei vorgesehen, dass die Schwingungsdämpfungseinrichtung direkt oder mittels des oder eines weiteren Aktors an einem Getriebegehäuse abgestützt ist. Erfindungsgemäß ist die Schwingungsdämpfüngseinrichtung gegenüber dem Getriebegehäuse abgestützt, so dass die Schwingungsdämpfungseinrichtung sich nicht mit dem Drehmomentwandler dreht, sondern eine Seite der Schwingungsdämpfungseinrichtung letztlich zusammen mit dem Getriebegehäuse feststeht. Ferner kann dabei vorgesehen sein, dass alternativ zu der direkten Abstützung der Schwingungsdämpfungseinrichtung an dem Getriebegehäuse eine "aktive" Abstützung der Schwingungsdämpfungseinrichtung an dem Getriebegehäuse ausgebildet ist. Dazu kann bevorzugt ein Aktor verwendet werden, so dass die Schwingungsdämpfungs-einrichtung indirekt am Getriebegehäuse abgestützt und über den oder einen weiteren Aktor beeinflusst werden kann.

Gemäß einer Weiterbildung der vorbeschriebenen Ausgestaltung der erfindungsgemäßen Drehmomentübertragungseinrichtung kann vorgesehen sein, dass eine Federrate oder eine Kennlinie der Schwingungsdämpfungseinrichtung mittels des oder eines weiteren Aktors veränderbar ist. Demnach ist der Aktor derart gezielt ansteuerbar bzw. die Schwingungsdämpfungseinrichtung ist über den oder einen weiteren Aktor derart schaltbar, dass die Federrate oder die Kennlinie der Schwingungsdämpfungs-einrichtung veränderbar ist. Somit kann in Abhängigkeit des vorliegenden Betriebspunktes der Drehmomentübertragungseinrichtung die Federrate bzw. die Kennlinie der Schwingungsdämpfungseinrichtung eingestellt werden. Vorteilhafterweise ist es damit möglich, in jedem Betriebszustand der Drehmomentübertragungseinrichtung die Schwingungsdämpfungseinrichtung derart zu verändern, dass eine möglichst effiziente Dämpfung auftretender Schwingungen erfolgen kann.

Die vorbeschriebene Weiterbildung der erfindungsgemäßen Drehmomentübertragungseinrichtung kann ferner vorsehen, dass die Federrate oder die Kennlinie der Schwingungsdämpfungseinrichtung derart mittels des oder eines weiteren Aktors einstellbar ist, dass Schwingungen des einen Leistungszweigs der Leistungsverzweigungseinrichtung mit Schwingungen des anderen Leistungszweigs destruktiv interferieren.

Die Leistungsverzweigungseinrichtung teilt dabei eine eingehende Leistung bzw. ein eingehendes Drehmoment auf zwei Leistungszweige auf, wobei einer der bei-den Leistungszweige mittels der Schwingungsdämpfungseinrichtung gedämpft wird. Die auf die beiden Leistungszweige aufgeteilten Schwingungen werden anschließend in dem Punkt, in dem die Leistungszweige wieder zusammengeführt werden, überlagert. In Abhängigkeit des Betriebszustands kann, wie zuvor beschrieben, mittels des oder eines weiteren Aktors die Kennlinie bzw. die Federrate der Schwingungsdämpfungs-einrichtung verändert werden, sodass die Schwingungen des gedämpften Leistungszweigs destruktiv mit den Schwingungen im ungedämpften Leistungszweig interferieren können. Die dadurch entstehende Antiresonanz bewirkt ein besonders effektives Bedämpfen bzw. Tilgen der auftretenden Schwingungen, so dass möglichst wenige der ursprünglich auftretenden Schwingungen in die Getriebeeingangswelle eingeleitet werden.

Die erfindungsgemäße Drehmomentübertragungseinrichtung kann ferner dahingehend weitergebildet werden, dass die Leistungsverzweigungseinrichtung als Planetengetriebe ausgebildet ist oder ein solches aufweist. Demzufolge ist es möglich einen Leistungszweig der Leistungsverzweigungseinrichtung durch ein Hohlrad des Planetengetriebes und den anderen Leistungszweig durch ein Sonnenrad des Planetengetriebes zu führen, so dass diese mittels des Planetengetriebes, insbesondere durch die beiden Einträge auf die Planeten, wieder zusammengeführt werden können. Einer der beiden Leistungszweige ist, wie zuvor beschrieben, mit der Schwingungsdämpfungseinrichtung gekoppelt, so dass der eine Leistungszweig gedämpft und der andere Leistungszweig ungedämpft sein kann.

Gemäß einer Weiterbildung der erfindungsgemäßen Drehmomentübertragungseinrichtung kann ferner vorgesehen sein, dass ein Leitradstutzen des Drehmomentwandlers mit einem Sonnenrad des Planetengetriebes oder dass der Leitradstutzen des Drehmomentwandlers mit dem Sonnenrad des Planetengetriebes und der Schwingungsdämpfungseinrichtung verbunden ist. Einer der beiden Leistungs-zweige verläuft dabei durch das Leitrad in das Sonnenrad und der andere Leistungszweig durch das Turbinenrad und/oder die Lock-up-Kupplung über das Hohlrad in das Planetengetriebe. Die an dem Leitrad abgestützte Kraft bzw. das in dieses eingeleitete Drehmoment wird sonach auf das Sonnenrad übertragen und in das Planetengetriebe eingeleitet. Besonders bevorzugt ist dabei vorgesehen, dass das Sonnenrad des Planetengetriebes, das mit dem Leitradstutzen verbunden ist, gleich-zeitig mit der Schwingungsdämpfungseinrichtung verbunden ist, so dass der über das Leitrad geführte Leistungszweig der gedämpfte Leistungszweig ist. In das Leitrad eingeleitete Schwingungen können somit an die Schwingungsdämpfungseinrichtung übertragen und von dieser gedämpft werden.

Dazu ist das Sonnenrad und der Leitradstutzen bzw. das Leitrad auf einer gemeinsamen Statorwelle angeordnet. Das Leitrad ist gemäß dieser Ausgestaltung der Erfindung nicht fest mit dem Gehäuse des Drehmomentwandlers verbunden, sondern relativ dazu verdrehbar. Dadurch ist eine Relativbewegung zwischen dem Leitrad und dem Gehäuse des Drehmomentwandlers möglich, so dass Schwingungen in der Drehmomentübertragungseinrichtung, die auf das Leitrad übertragen werden, über die gemeinsame Statorwelle geführt und mittels der Schwingungsdämpfungs-einrichtung gedämpft werden können. Die Statorwelle dreht sich dabei nicht absolut mit der Drehzahl des Drehmomentwandlers, sondern erfährt lediglich eine "Schwing-leistung", die sie an die Schwingungsdämpfungseinrichtung bzw. von dieser gedämpft an das Sonnenrad überträgt.

Besonders bevorzugt kann dabei vorgesehen sein, dass das Sonnenrad und/oder die Schwingungsdämpfungseinrichtung direkt mit dem Leitradstutzen oder mit einem Leitradfreilaufinnenring verbunden sind. Das Leitrad weist dabei einen Freilaufinnenring auf, mittels dem die freie Drehbarkeit gewährleistet ist, sofern die Lock-up-Kupplung geschlossen ist. D.h., dass ab einer gewissen Drehzahl, sobald die Lock-up-Kupplung geschlossen wird, gewährleistet wird, dass das Leitrad sich frei mit dem Turbinenrad drehen kann.

Die erfindungsgemäße Drehmomentübertragungseinrichtung kann ferner dahingehend weitergebildet werden, dass die Getriebeeingangswelle mit einem Planetenträger des Planetengetriebes verbunden ist. Die beiden Leistungszweige, die, wie zuvor beschrieben, zum einen über den Leitradstutzen in das Sonnenrad und zum anderen über das Turbinenrad in das Hohlrad eingeleitet werden, werden durch das Planetengetriebe zusammengeführt, so dass die beiden überlagerten Drehmomente der bei-den Leistungszweige durch den Planetenträger an die Getriebeeingangswelle übertragen werden. Dabei findet, wie ebenfalls zuvor beschrieben, eine Überlagerung der Schwingungen der Leistungszweige statt, so dass im besonders bevorzugten Fall der Antiresonanz eine destruktive Interferenz zwischen den Schwingungen der beiden Leistungszweige vorliegt und somit eine nahezu vollständige Auslöschung der Schwingungen bewirkt werden kann. Dadurch wird erreicht, dass die über den Planetenträger in die Getriebeeingangswelle weitergegebenen Schwingungen nahezu vollständig eliminiert werden können.

Ferner kann bei der erfindungsgemäßen Drehmomentübertragungseinrichtung vorgesehen sein, dass das Hohlrad des Planetengetriebes mit einem Ausgang einer Lock-up-Kupplung und dem Turbinenrad verbunden ist, wobei der Eingang der Lock-up-Kupplung mit dem Antrieb verbunden ist. Die Leistungsverzweigung erfolgt sonach in Abhängigkeit des Öffnungs- bzw. Schließzustands der Lock-up-Kupplung über die Lock-up-Kupplung in das Hohlrad oder über das Turbinenrad in das Hohl-rad, wobei in das Sonnenrad, wie zuvor beschrieben, der zweite Leistungszweig über das Leitrad bzw. über den Leitradstutzen geführt ist.

Die Erfindung wird nachfolgend anhand von Ausführungsbeispielen unter Bezugnahme auf die Zeichnungen erläutert. Die Zeichnungen sind schematische Darstellungen und zeigen:
- Figur 1: eine Drehmomentübertragungseinrichtung die nicht unter den Wortlaut des Anspruchs 1 fällt, und

- Figur 2: eine erfindungsgemäße Drehmomentübertragungseinrichtung

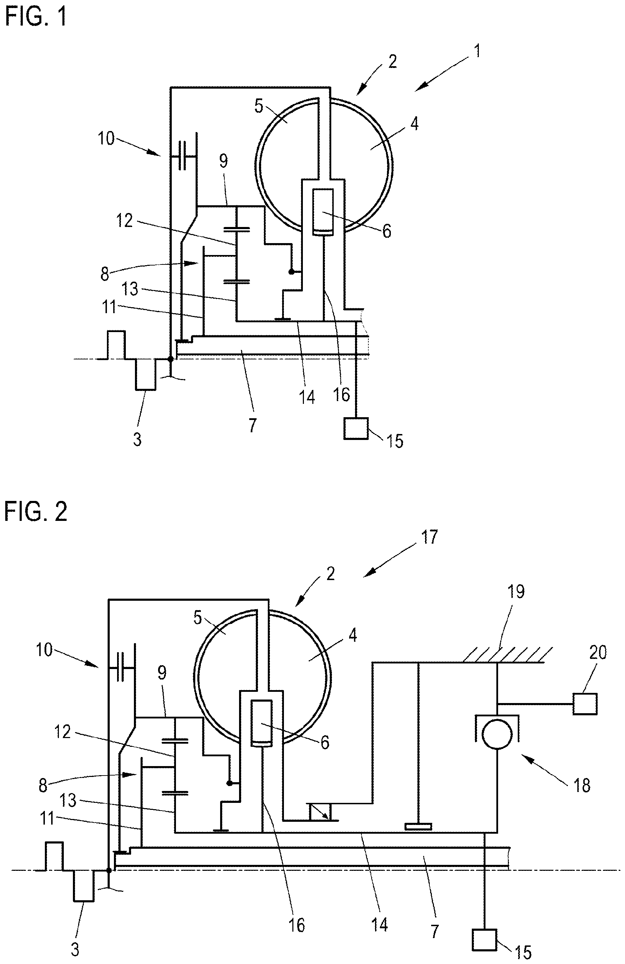

Figur 1 zeigt eine Drehmomentübertragungseinrichtung 1, umfassend einen Drehmomentwandler 2, der mit einem Antrieb 3, beispielsweise einer Eingangswelle, gekoppelt ist. Die Drehmomentübertragungseinrichtung 1 weist ferner ein Pumpenrad 4, ein Turbinenrad 5 und ein Leitrad 6 auf. Der Drehmomentübertragungseinrichtung 1 ist ferner eine Getriebeeingangswelle 7 und eine Leistungsverzweigungseinrichtung 8 zugeordnet.

Die Leistungsverzweigungseinrichtung 8 umfasst ein Hohlrad 9, das mit einer Lock-up-Kupplung 10 und dem Turbinenrad 5 gekoppelt bzw. verbunden ist. Die Leistungsverzweigungseinrichtung 8 weist ferner mehrere von einem Planetenträger 11 getragene Planeten 12 auf, die zum einen mit dem Hohlrad 9 und zum anderen mit einem Sonnenrad 13 kämmen. Der Planetenträger 11 ist mit der Getriebeeingangswelle 7 verbunden. Das Sonnenrad 13 ist an einem Ende einer Statorwelle 14 angeordnet, wobei die Statorwelle 14 mit einem Aktor 15 gekoppelt ist. Der Aktor 15 ist dafür vorgesehen, ein Drehmoment auf die Statorwelle 14 zu übertragen. Da die Statorwelle 14 mit dem Leitrad 6 gekoppelt ist, ist es möglich, durch den Aktor 15 ein Drehmoment in den Drehmomentwandler 2, insbesondere auf das Leitrad 6, zu übertragen. Damit ist es möglich, eine Schwingleistung in das System der Drehmomentübertragungseinrichtung 1 einzutragen.

Ein über den Antrieb 3 in die Drehmomentübertragungseinrichtung 1 eingeleitetes Drehmoment wird somit über das Pumpenrad 4 auf das Turbinenrad 5 übertragen. Durch die Leistungsverzweigung wird das Drehmoment im ersten Leistungszweig über das mit dem Hohlrad 9 gekoppelte Turbinenrad 5 auf das Hohlrad 9 übertragen und im anderen Leistungszweig wird das Drehmoment über das Leitrad 6 über einen Leitradstutzen 16 auf die Statorwelle 14 übertragen. Die beiden Leistungszweige werden sonach in der Leistungsverzweigungseinrichtung 8, die ersichtlich als Planetengetriebe ausgebildet ist, zusammengeführt, da die Planeten 12 sowohl mit dem Hohlrad 9, als auch mit dem Sonnenrad 13 kämmen. Falls die Lock-up-Kupplung 10 geschlossen ist, wird das von dem Antrieb 3 induzierte Drehmoment über die Lock-up-Kupplung 10 in das Hohlrad 9 eingeleitet.

Es ergeben sich folglich zwei Leistungszweige, wobei der eine Leistungszweig, der über das Leitrad 6 bzw. den Leitradstutzen 20 führt, mittels des Aktors 15 bedämpft werden kann. Es ist insbesondere möglich, ein entsprechendes Drehmoment bzw. Schwingungen durch gezielte Ansteuerung des Aktors 15 auf die Statorwelle 14 und somit auf das Leitrad 6 zu übertragen. In der Leistungsverzweigungseinrichtung 8 werden die beiden Leistungszweige zusammengeführt, so dass die in den einzelnen Leistungszweigen auftretenden Schwingungen überlagert werden. Durch eine geeignete Ansteuerung des Aktors 15 kann sonach insbesondere erreicht werden, dass die im einen Leistungszweig auftretenden Schwingungen destruktiv mit den im anderen Leistungszweig auftretenden Schwingungen überlagert werden können. Es ist sonach möglich, die in dem gedämpften Leistungszweig auftretenden Schwingungen antiresonant zu den Schwingungen des ungedämpften Leistungszweigs einzustellen und somit eine destruktive Überlagerung zu erreichen. Dadurch können die letztlich in die Getriebeeingangswelle 7 eingeleiteten Schwingungen aufgrund der Antiresonanz nahezu vollständig ausgeglichen werden.

Figur 2 zeigt eine Drehmomentübertragungseinrichtung 17 gemäß einem Ausführungsbeispiel. Die Drehmomentübertragungseinrichtung 17 gleicht dem grundsätzlichen Aufbau nach der Drehmomentübertragungseinrichtung 1 von Figur 1, weshalb gleiche Bezugszeichen für gleiche Bauteile verwendet werden. Insbesondere weist die Drehmomentübertragungseinrichtung 1 ebenfalls einen Drehmomentwandler 2, einen Antrieb 3, ein Pumpenrad 4, ein Turbinenrad 5 und ein Leitrad 6 auf. Ferner ist zwischen dem Drehmomentwandler 2 und der Getriebeeingangswelle 7 eine Leistungsverzweigungseinrichtung 8 vorgesehen, die ein Hohlrad 9, einen Planetenträger 11 mehrere Planeten 12 sowie in Sonnenrad 13 umfasst. Das Sonnenrad 13 ist antriebsseitig an einer Statorwelle 14 angeordnet.

Die Statorwelle 14, ist analog zu der Drehmomentübertragungseinrichtung 1 mit einem Aktor 15 gekoppelt, der dafür vorgesehen ist, Drehmomente in die Statorwelle 14 einzuleiten. Im Unterschied zu der Drehmomentübertragungseinrichtung 1 von Figur 1 weist die Drehmomentübertragungseinrichtung 17 eine Schwingungsdämpfungseinrichtung 18 auf, die an dem der Leistungsverzweigungseinrichtung 8 gegenüberliegenden Seite der Statorwelle 14 angeordnet ist. Die Schwingungsdämpfungseinrichtung 18 ist beispielsweise als Torsionsdämpfer ausgebildet und auf der der Statorwelle 14 gegenüberliegenden Seite mit einem Getriebegehäuse 19 verbunden bzw. an dem Getriebegehäuse 19 abgestützt.

Die Drehmomentübertragungseinrichtung 17 weist ferner einen weiteren Aktor 20 auf bzw. der Aktor 20 ist dieser zugeordnet, der dafür vorgesehen ist, die Schwingungsdämpfungseinrichtung 18 zu verändern. Durch eine entsprechende Ansteuerung des Aktors 20 kann die Federrate oder die Kennlinie der Schwingungsdämpfungseinrichtung 18 derart eingestellt werden, dass die in dem gedämpften Leistungszweig auftretenden Schwingungen antiresonant zu den Schwingungen des ungedämpften Leistungszweigs schwingen und daher destruktiv mit diesen überlagert werden können. Dadurch können die letztlich in die Getriebeeingangswelle 7 eingeleiteten Schwingungen aufgrund der Antiresonanz nahezu ausgeglichen werden. Insbesondere kann dadurch auch durch eine Kombination mit den mittels des Aktors 15 in die Statorwelle 14 eingeleiteten Schwingungen bzw. Schwingleistungen eine Einleitung in Echtzeit erfolgen, so dass eine optimale Auslöschung der in die Drehmomentübertragungseinrichtung 17 eingeleiteten Schwingungen vorgenommen werden kann.

### Bezugszeichenliste

- 1: Drehmomentübertragungseinrichtung
- 2: Drehmomentwandler
- 3: Antrieb
- 4: Pumpenrad
- 5: Turbinenrad
- 6: Leitrad
- 7: Getriebeeingangswelle
- 8: Leistungsverzweigungseinrichtung
- 9: Hohlrad
- 10: Lock-up-Kupplung
- 11: Planetenträger
- 12: Planet
- 13: Sonnenrad
- 14: Statorwelle
- 15: Aktor
- 16: Leitradstutzen
- 17: Drehmomentübertragungseinrichtung
- 18: Schwingungsdämpfungseinrichtung
- 19: Getriebegehäuse
- 20: Aktor

## Patentansprüche

1. Drehmomentübertragungseinrichtung (1, 17), umfassend einen zumindest abschnittsweise innerhalb eines Gehäuses der Drehmomentübertragungseinrichtung (1, 17) angeordneten Drehmomentwandler (2) mit einem Pumpenrad (4), einem Turbinenrad (5) und einem Leitrad (6), wobei das Leitrad (6) mit einer relativ zu dem Gehäuse des Drehmomentwandlers (2) drehbaren Statorwelle (14) verbunden ist, wobei ein Aktor (15) mit der Statorwelle (14) gekoppelt und dafür vorgesehen ist, über die Statorwelle (14) ein Drehmoment auf das Leitrad (6) auszuüben, **dadurch gekennzeichnet, dass** eine Schwingungsdämpfungseinrichtung (18) vorgesehen ist, die außerhalb des Gehäuses der Drehmomentübertragungseinrichtung (1, 17) getriebeseitig angeordnet ist, dass eine Leistungsverzweigungseinrichtung (8) zwischen dem Drehmomentwandler (2) und einer Getriebeeingangswelle (7) innerhalb des Gehäuses der Drehmomentübertragungseinrichtung angeordnet ist, und dass die Schwingungsdämpfungseinrichtung (18) mittels des oder eines weiteren Aktors (15, 20) an einem Getriebegehäuse (19) abgestützt ist.

2. Drehmomentübertragungseinrichtung nach Anspruch 1, **dadurch gekennzeichnet, dass** eine Federrate oder eine Kennlinie der Schwingungsdämpfungseinrichtung (18) mittels des oder eines weiteren Aktors (15, 20) veränderbar ist.

3. Drehmomentübertragungseinrichtung nach Anspruch 2, **dadurch gekennzeichnet, dass** die Federrate oder die Kennlinie der Schwingungsdämpfungseinrichtung (18) derart mittels des oder eines weiteren Aktors (15, 20) einstellbar ist, dass Schwingungen des einen Leistungszweigs der Leistungsverzweigungseinrichtung (8) mit Schwingungen des anderen Leistungszweigs destruktiv interferieren.

4. Drehmomentübertragungseinrichtung nach einem der vorangehenden Ansprüche, **dadurch gekennzeichnet, dass** die Leistungsverzweigungseinrichtung (8) als Planetengetriebe ausgebildet ist oder ein solches aufweist.

5. Drehmomentübertragungseinrichtung nach Anspruch 4, **dadurch gekennzeichnet, dass** ein Leitradstutzen (16) des Drehmomentwandlers (2) mit einem Sonnenrad (13) des Planetengetriebes oder dass der Leitradstutzen (16) des Drehmomentwandlers (2) mit dem Sonnenrad (13) des Planetengetriebes und der Schwingungsdämpfungseinrichtung (18) verbunden ist.

6. Drehmomentübertragungseinrichtung nach Anspruch 4 oder 5, **dadurch gekennzeichnet, dass** das Sonnenrad (13) und/oder die Schwingungsdämpfungs-einrichtung (18) direkt mit dem Leitradstutzen (16) oder mit einem Leitradfreilaufinnenring verbunden ist.

7. Drehmomentübertragungseinrichtung nach einem der Ansprüche 4 bis 6,
**dadurch gekennzeichnet, dass** die Getriebeeingangswelle (7) mit einem Planetenträger (11) des Planetengetriebes verbunden ist.

8. Drehmomentübertragungseinrichtung nach einem der Ansprüche 4 bis 7,
**dadurch gekennzeichnet, dass** das Hohlrad (9) des Planetengetriebes mit einem Ausgang einer Lock-up-Kupplung (10) und dem Turbinenrad (5) verbunden ist, wobei der Eingang der Lock-up-Kupplung (10) mit einem Antrieb (3) verbunden ist.

## Claims

1. A torque-transmitting device (1, 17), comprising a torque converter (2) arranged at least in sections within a housing of the torque-transmitting device (1, 17) and having a pump wheel (4), a turbine wheel (5) and a guide wheel (6), wherein the guide wheel (6) is connected to a stator shaft (14) rotatable relative to the housing of the torque converter (2), wherein an actuator (15) is coupled to the stator shaft (14) and is provided for exerting a torque on the guide wheel (6) via the stator shaft (14), **characterized in that** a vibration damping device (18) is provided, which is arranged outside the housing of the torque-transmitting device (1, 17) on the transmission side, **in that** a power branching device (8) is arranged between the torque converter (2) and a transmission input shaft (7) inside the housing of the torque-transmitting device, and **in that** the vibration damping device (18) is supported on a transmission housing (19) by means of the or a further actuator (15, 20).

2. The torque-transmitting device according to claim 1, **characterized in that** a spring rate or a characteristic curve of the vibration damping device (18) is variable by means of the or a further actuator (15, 20).

3. The torque-transmitting device according to claim 2, **characterized in that** the spring rate or the characteristic curve of the vibration damping device (18) is adjustable by means of the or a further actuator (15, 20) in such a way that vibrations of one power branch of the power branching device (8) destructively interfere with vibrations of the other power branch.

4. The torque-transmitting device according to one of the preceding claims, **characterized in that** the power branching device (8) is designed as or has a planetary gear.

5. The torque-transmitting device according to claim 4, **characterized in that** a guide wheel socket (16) of the torque converter (2) is connected to a sun gear (13) of the planetary gear or **in that** the guide wheel socket (16) of the torque converter (2) is connected to the sun gear (13) of the planetary gear and the vibration damping device (18).

6. The torque-transmitting device according to claim 4 or 5, **characterized in that** the sun gear (13) and/or the vibration damping device (18) is/are directly connected to the guide wheel socket (16) or to a guide wheel freewheel inner ring.

7. The torque-transmitting device according to one of claims 4 to 6, **characterized in that** the transmission input shaft (7) is connected to a planetary carrier (11) of the planetary gear.

8. The torque-transmitting device according to one of claims 4 to 7, **characterized in that** the ring gear (9) of the planetary gear is connected to an output of a lock-up clutch (10) and the turbine wheel (5), wherein the input of the lock-up clutch (10) is connected to a drive (3).

## Revendications

1. Dispositif de transmission de couple (1, 17) comprenant un convertisseur de couple (2) qui est disposé au moins par endroits à l'intérieur d'un carter du dispositif de transmission de couple (1, 17) et est doté d'une roue de pompe (4), d'une roue de turbine (5) et d'une roue de guidage (6), la roue de guidage (6) étant reliée à un arbre de stator (14) pouvant tourner par rapport au carter du convertisseur de couple (2), un actionneur (15) étant accouplé à l'arbre de stator (14) et étant destiné à appliquer un couple sur la roue de guidage (6) par l'intermédiaire de l'arbre de stator (14), **caractérisé en ce qu'**un dispositif d'amortissement des vibrations (18) est prévu, disposé en dehors du carter du dispositif de transmission de couple (1, 17) côté transmission, **en ce qu'**un dispositif de répartition de puissance (8) est disposé entre le convertisseur de couple (2) et un arbre d'entrée de transmission (7) à l'intérieur du carter du dispositif de transmission de couple et **en ce que** le dispositif d'amortissement des vibrations (18) est en appui sur une boîte de vitesses (19) au moyen du ou d'un autre actionneur (15, 20).

2. Dispositif de transmission de couple selon la revendication 1, **caractérisé en ce qu'**une constante de rappel ou une courbe caractéristique du dispositif d'amortissement des vibrations (18) peut être modifiée au moyen du ou d'un autre actionneur (15, 20).

3. Dispositif de transmission de couple selon la revendication 2, **caractérisé en ce que** la constante de rappel ou la courbe caractéristique du dispositif d'amortissement des vibrations (18) peut être réglée au moyen du ou d'un autre actionneur (15, 20) de sorte que les vibrations de la branche de puissance du dispositif de répartition de puissance (8) interfèrent de manière destructive avec les vibrations de l'autre branche de puissance.

4. Dispositif de transmission de couple selon l'une quelconque des revendications précédentes, **caractérisé en ce que** le dispositif de répartition de puissance (8) est conçu comme un engrenage planétaire ou présente un tel engrenage.

5. Dispositif de transmission de couple selon la revendication 4, **caractérisé en ce qu'**un support de roue de guidage (16) du convertisseur de couple (2) est relié à une roue solaire (13) de l'engrenage planétaire ou **en ce que** le support de roue de guidage (16) du convertisseur de couple (2) est relié à une roue solaire (13) de l'engrenage planétaire et au dispositif d'amortissement des vibrations (18).

6. Dispositif de transmission de couple selon la revendication 4 ou 5, **caractérisé en ce que** la roue solaire (13) et/ou le dispositif d'amortissement des vibrations (18) est relié directement au support de roue de guidage (16) ou à une bague interne à roue libre de la roue de guidage.

7. Dispositif de transmission de couple selon l'une quelconque des revendications 4 à 6, **caractérisé en ce que** l'arbre d'entrée de transmission (7) est relié à un porte-satellites (11) de l'engrenage planétaire.

8. Dispositif de transmission de couple selon l'une quelconque des revendications 4 à 7, **caractérisé en ce que** la couronne (9) de l'engrenage planétaire est reliée à une sortie d'un embrayage de pontage (10) et à la roue de turbine (5), l'entrée de l'embrayage de pontage (10) étant reliée à un entraînement (3).
